# EUROPEAN PATENT APPLICATION

(11) **EP 2 123 719 A1**
(43) Date of publication of application: **25.11.2009**
(21) Application number: 08704037.4
(22) Date of filing: 28.01.2008
(51) Int. Cl.: C08L 101/02, B32B 27/28, B32B 27/32, B65D 1/00, B65D 30/02, B65D 65/40, C08L 23/00, C08L 23/08, C08L 25/10, C08L 29/04, C08L 77/00, C09J 5/06, C09J 123/06, C09J 123/08, C09J 123/12, C09J 153/02, C09J 201/02

(54) **RESIN COMPOSITION AND MULTILAYER STRUCTURE**

(30) Priority: 29.01.2007 JP 2007018363
(71) Applicant: Kuraray Co., Ltd., Kurashiki-shi Okayama 710-0801 (JP)
(72) Inventor: IGARASHI, Takeyuki, Kurashiki-shi Okayama 713-8550 (JP); MURATA, Tomonori, Kurashiki-shi Okayama 713-8550 (JP); WATANABE, Tomoyuki, Kurashiki-shi Okayama 713-8550 (JP)
(74) Representative: Müller-Boré & Partner Patentanwälte
(86) International application number: PCT/JP2008/051228
(87) International publication number: WO 2008/093648

(57) **Abstract**

An object of the present invention is to provide a resin composition suitable for adhering a layer of a base material, such as polyolefins, and a layer of a barrier resin, such as ethylene-vinyl alcohol copolymers. The object is achieved by a resin composition (A) including: a thermoplastic resin (a1) having functional groups of at least one kind selected from the group consisting of a boronic acid group and boron-containing groups capable of being converted into a boronic acid group in the presence of water, a polyolefin (a2) not having the functional groups, and a thermoplastic elastomer (a3) not having the functional groups, wherein the thermoplastic resin (a1) is contained 1 to 20 parts by mass and the thermoplastic elastomer (a3) is contained 3 to 50 parts by mass in terms of 100 parts by mass of the polyolefin (a2).

## Description

### TECHNICAL FIELD

The present invention relates to a resin composition containing a thermoplastic resin having boron-containing functional groups, a polyolefin, and a thermoplastic elastomer, and an adhesive comprising the same. The present invention also relates to a multilayer structure including a layer of a barrier resin containing an ethylene-vinyl alcohol copolymer and a layer of a polyolefin laminated to each other via a layer of the resin composition. The present invention further relates to applications of the multilayer structure and methods for producing the same.

### BACKGROUND ART

Ethylene-vinyl alcohol copolymers (hereinafter, may be referred to as EVOH) are excellent in, for example, barrier properties, oil resistance, and aroma retention properties and therefore have been used in various applications. However, EVOHs are resins poor in flexibility and the barrier properties deteriorate when absorbing moisture, so that are often used with other resins, such as polyolefins, in lamination.

However, because the adhesion of EVOHs to polyolefins is not good, it is necessary to form an adhesive layer between both layers. As such an adhesive, polyolefins modified with maleic anhydride are widely used. For example, Patent Document 1 discloses a multilayer structure in which a resin composition containing (1) a modified propylene copolymer modified with an unsaturated carboxylic acid or anhydride thereof, (2) a non-modified polypropylene, and (3) a low density polyethylene and/or copolymer rubber is used as an adhesive to adhere a layer of a polypropylene and a layer of an EVOH. As an example for a case of using copolymer rubber as the (3) here, ethylene/α-olefin copolymer rubber having a density of 0.890 or less, such as ethylene/propylene rubber and ethylene/butene rubber is disclosed. However, such a resin modified with an unsaturated carboxylic acid or anhydride thereof is easily colored due to the heat during the melt-molding, so that it has been a problem in applications where the appearance is an important issue, such as food packaging containers.

In contrast, since resins containing functional groups of at least one kind selected from the group consisting of a boronic acid group and boron-containing groups each capable of being converted into a boronic acid group in the presence of water have a very high reactivity with EVOHs, they have good adhesion to EVOHs when used as an adhesive. Furthermore, it is possible to obtain a multilayer structure that is not easily colored during melt-molding and excellent in the appearance. For example, Patent Document 2 discloses a multilayer structure produced by laminating an EVOH layer and a polyolefin layer via a layer of an adhesive. As such an adhesive, a resin composition is used which contains a polyolefin and a styrene-hydrogenated diene block copolymer, namely a hydrogenated product of a styrene-diene block copolymer, containing in its side chain at least one functional group selected from the group consisting of a boronic acid group and boron-containing groups each capable of being converted into a boronic acid group in the presence of water, and it is shown that such a multilayer structure has good interlayer adhesion strength. Since such a resin containing functional groups of at least one kind selected from the group consisting of a boronic acid group and boron-containing groups each capable of being converted into a boronic acid group in the presence of water is expensive, it is preferable, from an economical perspective, to use it as an adhesive resin composition by mixing it with an inexpensive polyolefin.

The adhesive resin composition used in Patent Document 2 can be produced by melt-kneading the polyolefin and the hydrogenated product of the styrene-diene block copolymer. In this procedure, the type of the polyolefin to be mixed is described to be usually preferred to conform the layer of the polyolefin to be laminated to the layer of the EVOH. In fact, in Examples in Patent Document 2, the layer of the adhesive resin composition containing the linear low-density polyethylene and the hydrogenated product of the styrene-diene block copolymer is laminated to a layer of a linear low-density polyethylene, and the layer of the adhesive resin composition containing the polypropylene and the hydrogenated product of the styrene-diene block copolymer is laminated to a layer of a polypropylene. However, the adhesion strength is sometimes not sufficient when using a resin composition containing a polyolefin and the hydrogenated product of the styrene-diene block copolymer as an adhesive.

On the other hand, applications of multilayer structures having a layer of a barrier resin, such as EVOHs, are varied, and one of the representative examples is containers, particularly containers for foods and drinks. Since plastic containers are generally excellent in, for example, lightness of weight, economical efficiency, formability, impact resistance, transparency, reusability, they are widely used as containers for packaging foods and drinks in alternation with conventional containers made of metal, glass, or the like. Due to the diversified lifestyles and awareness to safety of the consumers, and the like, there are increasing demands for long term storage performance, hygienic safety, and the like in foods and drinks. It has thus become important to give long term storage performance and functions to prevent decomposition and alteration to containers for packaging foods and drinks, and containers made of multilayer structures having a layer of a barrier resin, such as EVOHs, are preferably used.

Among them, there is increasing importance of containers to which high temperature processing for retort treatment can be applied (hereinafter, may be simply referred to as "retort containers"). Such retort containers are usually constituted of a multilayer structure including a layer of a base resin and a layer of a barrier resin, such as EVOHs. There is generally interposed a layer of an adhesive between the base resin layer and the barrier resin layer, and for example, adhesives described in Patent Document 1 are used. However, when carrying out high temperature processing in such a multilayer structure, there have been cases that the interlayer adhesion strength between the base resin layer and the barrier resin layer is decreased and that peel and the like occur. Accordingly, in order to maintain high interlayer adhesion strength between the base resin layer and the barrier resin layer even after retort treatment, it is necessary to have high interlayer adhesion strength before retort treatment that takes into account the decrease after retort treatment. In spite of that, the use of an adhesive having excessively high interlayer adhesion strength between the base resin layer and the barrier resin layer before retort treatment may result in occurrence of continuous irregularities in the interface of each interlayer, which may be referred to as "orange peel", when producing multilayer structures by, for example, coextrusion and thus the appearance of multilayer structures sometimes deteriorate.

In addition, multilayer structures produced by laminating a layer of a base resin and a layer of a barrier resin, such as EVOHs, via a layer of an adhesive are obtained by melt-molding and then often subjected further to secondary processing. They are often subjected to, for example, uniaxial or biaxial stretching, thermoforming, and blow molding. However, the interlayer adhesion strength is often decreased due to the deformation and the like generated during the secondary processing, so that there has also been a demand for alleviation on this point.

[Patent Document 1] JP 2-245042A
[Patent Document 2] WO 02/060961

### DISCLOSURE OF THE INVENTION

### PROBLEM TO BE SOLVED BY THE INVENTION

The present invention was made in order to solve the aforementioned problems. An object of the present invention is to provide a resin composition suitable for adhering a layer of a base material, such as polyolefins, and a layer of a barrier resin, such as EVOHs. It is also an object to provide a multilayer structure having a layer of such a resin composition and applications thereof.

### MEANS FOR SOLVING THE PROBLEM

The aforementioned problems are solved by providing a resin composition (A) comprising: a thermoplastic resin (a1) having functional groups of at least one kind selected from the group consisting of a boronic acid group and boron-containing groups capable of being converted into a boronic acid group in the presence of water (hereinafter simply referred to as a thermoplastic resin (a1)), a polyolefin (a2) not having the functional groups (hereinafter simply referred to as a polyolefin (a2)), and a thermoplastic elastomer (a3) not having the functional groups (hereinafter simply referred to as a thermoplastic elastomer (a3)), wherein the thermoplastic resin (a1) is contained 1 to 20 parts by mass and the thermoplastic elastomer (a3) is contained 3 to 50 parts by mass in terms of 100 parts by mass of the polyolefin (a2).

In this embodiment, it is preferred that the functional groups contained in the thermoplastic resin (a1) are cyclic boronate ester groups. It is also preferred that the thermoplastic resin (a1) is a hydrogenated product of a styrene-diene block copolymer. It is preferred that the polyolefin (a2) is a polypropylene, and it is also preferred that the polyolefin (a2) is a polyethylene, particularly a polyethylene having a density of from 0.89 to 0.93 g/cm³. It is preferred that a Vicat softening temperature of the thermoplastic elastomer (a3) is from 40 to 80°C. It is also preferred that the thermoplastic elastomer (a3) is a polyolefin-based elastomer, particularly an ethylene-α-olefin copolymer having a density of less than 0.89 g/cm³. An adhesive comprising the resin composition (A) is a preferred embodiment.

The aforementioned problems are also solved by providing a multilayer structure comprising a layer of a barrier resin (B) containing an ethylene-vinyl alcohol copolymer (b1) and a layer of a polyolefin (C) laminated to each other via a layer of the resin composition (A). In this embodiment, it is preferable that the barrier resin (B) is made of a resin composition containing 3 to 50 parts by mass of a polyamide (b2) in terms of 100 parts by mass of the ethylene-vinyl alcohol copolymer (b1). It is also preferred that the polyolefin (C) is a polypropylene.

A preferred embodiment of the present invention is a retort packaging container comprising the multilayer structure, wherein the polyolefin (a2) is a polypropylene. Another preferred embodiment of the present invention is a shaped article of secondary processing comprising the multilayer structure, wherein the polyolefin (a2) is a polyethylene, particularly a stretched film and a thermoformed article.

The aforementioned problems are also solved by providing a method for producing a multilayer structure, comprising: coextruding or coinjecting the resin composition (A), the barrier resin (B), and the polyolefin (C), and then performing secondary processing at a temperature of a melting point of the polyolefin (a2) or higher. In this embodiment, it is preferable that the polyolefin (a2) is a polyethylene and the polyolefin (C) is a polypropylene.

### EFFECT OF THE INVENTION

Resin compositions of the present invention are suitable for adhesives to adhere a layer of a base material, such as polyolefins, and a layer of a barrier resin, such as EVOHs. In other words, multilayer structures of the present invention including a layer of a barrier resin and a layer of a base material laminated to each other via a layer of an adhesive containing the resin composition has good interlayer adhesion strength.

A preferred embodiment of the present invention is a retort packaging container. When producing multilayer structures by, for example, coextrusion, the continuous irregularities in the interface of each interlayer, which is referred to as "orange peel" does not occur, thereby the appearance of multilayer structures does not deteriorate, and the interlayer adhesion strength is also good after retort treatment. Another preferred embodiment of the present invention is a shaped article of secondary processing. Even when obtained by melt-molding and then subjected further to secondary processing, it is possible to suppress the decrease in the interlayer adhesion strength due to, for example, the deformation generated during secondary processing.

### BEST MODE FOR CARRYING OUT THE INVENTION

Resin compositions (A) of the present invention contain a thermoplastic resin (a1), a polyolefin (a2), and a thermoplastic elastomer (a3) at mass ratios in a specific range.

First, the thermoplastic resin (a1) is described. The thermoplastic resin (a1) is characterized by having functional groups of at least one kind selected from the group consisting of a boronic acid group and boron-containing groups capable of being converted into a boronic acid group in the presence of water. Among the boron-containing functional groups, the boronic acid group is a group represented by the following formula (I).

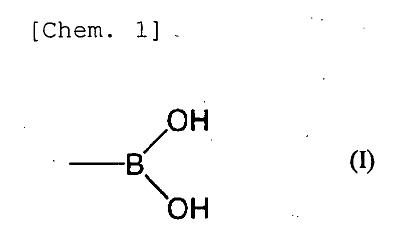

The boron-containing group capable of being converted into a boronic acid group in the presence of water indicates a boron-containing group that can be hydrolyzed in the presence of water to be converted into a boronic acid group represented by the above formula (I). More specifically, the above boron-containing group means a functional group capable of being converted into a boronic acid group when being hydrolyzed under conditions of from room temperature to 150°C for from 10 minutes to 2 hours by use, as a solvent, of water only, a mixture of water and an organic solvent (e.g., toluene, xylene and acetone), a mixture of a 5% aqueous boric acid solution and the above described organic solvent, or the like. Representative examples of such functional groups include boronic ester groups represented by the following formula (II), boronic anhydride groups represented by the following formula (III), and boronic acid salt groups represented by the following formula (IV):

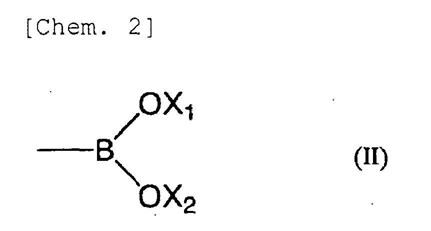

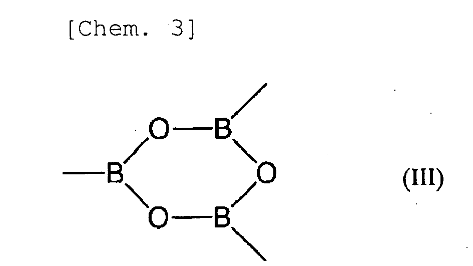

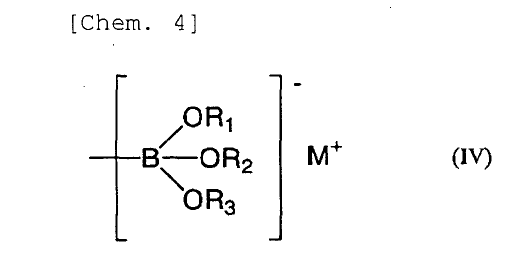

wherein X₁ and X₂ are the same or different and each represent a hydrogen atom, an aliphatic hydrocarbon group (e.g., a linear or branched alkyl or alkenyl group having from 1 to 20 carbon atoms), an alicyclic hydrocarbon group (e.g., a cycloalkyl group and a cycloalkenyl group), or an aromatic hydrocarbon group (e.g., a phenyl group and a biphenyl group), where the aliphatic hydrocarbon group, the alicyclic hydrocarbon group and the aromatic hydrocarbon group may have a substituent, X₁ and X₂ may be combined together, provided that in no cases both X₁ and X₂ are hydrogen atoms; R₁, R₂ and R₃ each represent a hydrogen atom, an aliphatic hydrocarbon group, an alicyclic hydrocarbon group or an aromatic hydrocarbon group like X₁ and X₂ mentioned above, and M represents alkali metal.

Specific examples of the boronic ester group represented by the general formula (II) include dimethyl boronate group, diethyl boronate group, dipropyl boronate group, diisopropyl boronate group, dibutyl boronate group, dihexyl boronate group, dicyclohexyl boronate group, ethylene glycol boronate group, propylene glycol boronate group, 1,3-propanediol boronate group, 1,3-butanediol boronate group, neopentyl glycol boronate group, catechol boronate group, glycerin boronate group, trimethylolethane boronate group, trimethylolpropane boronate group, diethanolamine boronate group, and the like.

The boronic acid salt groups represented by the general formula (IV) may be alkali metal boronate groups, etc. Specific examples include sodium boronate group, potassium boronate group, and the like.

Among such boron-containing functional groups, cyclic boronate ester groups are preferred in view of thermal stability. Examples of the cyclic boronate ester groups include 5-membered or 6-membered ring-containing cyclic boronate ester groups. Specific examples include ethylene glycol boronate group, propylene glycol boronate group, 1,3-propanediol boronate group, 1, 3-butanediol boronate group, glycerin boronate group, and the like.

The thermoplastic resin (a1) may contain only one kind of or two or more kinds of boron-containing functional groups. The amount of the boron-containing functional groups is preferably from 0.0001 to 0.002 equivalents per gram of the thermoplastic resin (a1), namely from 100 to 2000 µeq/g, and more preferably from 150 to 1500 µeq/g. When the amount of the functional groups is less than 100 µeq/g, the interlayer adhesion strength of the resulting multilayer structure may be decreased. When the amount of the functional groups exceeds 2000 µeq/g, gelation easily may occur and the appearance of the resulting multilayer structure may deteriorate.

Although the bonding form of the boron-containing functional groups contained in the thermoplastic resin (a1) used in the present invention is not particularly restricted and the boron-containing functional groups may be contained at side chains and terminals, the boron-containing functional groups are preferably contained as side chains of the polymer. It is easy to obtain a large content of boron-containing functional groups when they are contained as side chains. When the boron-containing functional groups are bonded only to terminals of a polymer, the amount of the functional groups becomes relatively low particularly in a polymer of high molecular weight, and the reactivity of the thermoplastic resin (a1) may become insufficient.

Specific examples of the thermoplastic resin (a1) include polyolefins such as polyethylene (very low density, low density, middle density, high density), ethylene-vinyl acetate copolymers, ethylene-acrylic ester copolymers, polypropylene, ethylene-propylene copolymers and copolymers of ethylene with an α-olefin such as 1-butene, isobutene, 3-methylpentene, 1-hexene and 1-octene; products resulting from graft modification of the aforementioned polyolefins with maleic anhydride, glycidyl methacrylate and the like; styrene resins such as polystyrene and styrene-acrylonitrile copolymers; styrene-diene block copolymers, such as styrene-butadiene diblock copolymers, styrene-isoprene diblock copolymers, styrene-butadiene-styrene triblock copolymers and styrene-isoprene-styrene triblock copolymers, or hydrogenated products thereof ; (meth)acrylic ester resins such as poly(methyl acrylate), poly(ethyl acrylate) and poly(methyl methacrylate); vinyl halide-based resins such as poly(vinyl chloride) and vinylidene fluoride; semiaromatic polyesters such as poly(ethylene terephthalate) and poly(butylene terephthalate); and aliphatic polyesters such as polyvalerolactone, polycaprolactone, poly(ethylene succinate) and poly(butylene succinate). These may be used singly or in combination of two or more kinds. Among these, polyolefins and styrene-diene block copolymers or hydrogenated products thereof are preferred, and hydrogenated products of styrene-diene block copolymers are particularly preferred.

When the thermoplastic resin (a1) is a hydrogenated product of a styrene-diene block copolymer, the mass ratio of styrene units to diene units contained in the copolymer resin is preferably from 5/95 to 70/30 as the mass ratio before hydrogenation, and more preferably from 10/90 to 50/50. When the mass ratio is within such ranges, the compatibility of the thermoplastic resin (a1) with the polyolefin (a2) becomes good. When particularly high interlayer adhesion strength is desired, a smaller content of styrene units is preferred. Specifically, the mass ratio of styrene units to diene units is preferably 30/70 or less.

The melt flow rate (at 190°C, under a load of 2160 g) of the thermoplastic resin (a1) is preferably from 0.2 to 50 g/10 min. When the melt flow rate is included in this range, the dispersibility of the thermoplastic resin (a1) in the resin composition (A) becomes good. The melt flow rate is more preferably 0.5 g/10 min or more. The melt flow rate is more preferably 30 g/10 min or less.

The thermoplastic resin (a1) used for the present invention can be produced by a method described in Patent Document 2 (WO 02/060961).

Next, the polyolefin (a2) is described. The polyolefin (a2) is a resin harder than the thermoplastic elastomer (a3), and is a major structural component in the resin composition (A) of the present invention. The polyolefin (a2) does not have the functional groups of at least one kind selected from the group consisting of a boronic acid group and boron-containing groups capable of being converted into a boronic acid group in the presence of water. Although the type of the polyolefin (a2) is not particularly limited, preferable examples include polyethylenes and polypropylenes.

The Vicat softening temperature (measured in accordance with JIS K 7206) of the polyolefin (a2) is preferably over 80°C. When the Vicat softening temperature is at 80°C or less, the layer of an adhesive may be deformed and may cause difficulty for use depending on the applications, and thus the Vicat softening temperature is more preferably at 90°C or higher. Considering the shaping workabilitly, the Vicat softening temperature is usually at 200°C or less.

The polyethylenes used as the polyolefin (a2) include homopolymers of ethylene and copolymers containing ethylene as a major component. "Containing as a major component" in this context means to include 50 mass% or more. Representative examples of the polyethylenes include high density polyethylenes, low density polyethylenes, and linear low-density polyethylenes. It should be noted that the monomers to be copolymerized with ethylene are not limited to α-olefins used for linear low-density polyethylenes, and other monomers having an ethylenic double bond can also be used.

In view of obtaining good interlayer adhesion strength, it is preferred to use polyethylenes having a density of from 0.89 to 0.93 g/cm³ as the polyolefin (a2). When the density is too low, the layer of an adhesive may be deformed and may cause difficulty for use depending on the applications, and thus the density is more preferably 0.90 g/cm³ or more. On the other hand, when the density is too high, the interlayer adhesion strength may be decreased, and thus the density is more preferably 0.925 g/cm³ or less, even more preferably 0.92 g/cm³ or less, and particularly preferably 0.915 g/cm³ or less. Examples of such polyethylenes include low density polyethylenes and linear low-density polyethylenes, and in view of adhesion, linear low-density polyethylenes are preferred.

The melt flow rate (at 190°C, under a load of 2160 g) of the polyethylene used as the polyolefin (a2) is preferably from 0. 2 to 70 g/10 min. When the melt flow rate is within such ranges, the dispersibility of each resin component in the resin composition (A) becomes good. The melt flow rate is more preferably 0.5 g/10 min or more. The melt flow rate is more preferably 50 g/10 min or less.

The polypropylenes used as the polyolefin (a2) include homopolymers of propylene and copolymers containing propylene as a major component. "Containing as a major component" in this context means to include 50 mass% or more. Other than the homopolymers of propylene, copolymers containing monomer units, such as ethylene and α-olefin, in a small amount also may be used as such polypropylenes. In the same manner as so-called HIPS (High Impact Polystyrene), it is also possible to use polypropylenes to which the impact resistance is improved by adding a rubber component. The melting point of the polypropylene is preferably from 115 to 190°C. The melting point is more preferably at 120°C or higher, and even more preferably at 140°C or higher.

The melt flow rate (at 230°C, under a load of 2160 g) of the polypropylene used as the polyolefin (a2) is preferably from 0.2 to 70 g/10 min. When the melt flow rate is within such ranges, the dispersibility of each resin component in the resin composition (A) becomes good. The melt flow rate is more preferably 0.5 g/10 min or more. The melt flow rate is more preferably 50 g/10 min or less.

Subsequently, the thermoplastic elastomer (a3) is described. The largest characteristic of the resin composition (A) of the present invention is to contain the thermoplastic elastomer (a3) in addition to the thermoplastic resin (a1) and the polyolefin (a2). In this way, excellent interlayer adhesion strength is exhibited when using the resin composition (A) as an adhesive. Although the reason for this is not quite clear, it is supposed that the thermoplastic elastomer (a3) is compatible with the polyolefin (a2), thereby the crystallization rate of the polyolefin (a2) is reduced, and thus the thermoplastic resin (a1) becomes to easily move to the interface of the layer of the barrier resin (B), such as EVOHs, during melt-molding, which leads to promotion of the reaction and the interaction between the boron-containing functional groups contained in the thermoplastic resin (a) and the functional groups of the barrier resin (B), resulting in improvement of the interlayer adhesion strength.

The types of the thermoplastic elastomer (a3) are not particularly limited, and it is possible to use polyolefin-based elastomers, polystyrene-based elastomers, polyurethane-based elastomers, polyester-based elastomers, polyamide-based elastomers, and the like. However, among these, considering the compatibility with the polyolefin (a2), costs, and the like, polyolefin-based elastomers or polystyrene-based elastomers are preferred, and polyolefin-based elastomers are most suited.

As the polyolefin-based elastomer, polyethylene-based elastomers or polypropylene-based elastomer can be used. In this context, polyethylene-based elastomers mean elastomers including 50 mass% or more of ethylene, and polypropylene-based elastomers mean elastomers including 50 mass% or more of propylene. Among them, polyethylene-based elastomers are preferably used, and it is possible to use elastomers obtained by copolymerizing ethylene with monomers capable of copolymerization, such as α-olefin, vinyl acetate, and alkyl (meth)acrylate.

Among the polyethylene-based elastomers, ethylene-α-olefin copolymers having a density less than 0.89 g/cm³ are particularly preferred. The effect for exhibiting interlayer adhesion strength tends not to be sufficient when the ethylene-α-olefin copolymers have a density of 0.89 g/cm³_{.} or more, and the density is more preferably 0.885 g/cm³ or less. In contrast, the density is usually 0.85 g/cm³ or more. Particularly preferred ethylene-α-olefin copolymers are ethylene-propylene copolymers and ethylene-1-butene copolymers.

On the other hand, examples of the polystyrene-based elastomers include styrene-diene-styrene block copolymers or hydrogenated products thereof.

The Vicat softening temperature (measured in accordance with JIS K 7206) of such a thermoplastic elastomer (a3) is preferably from 40 to 80°C. Thus, it is supposed that using such a thermoplastic elastomer (a3) having a relatively low Vicat softening temperature causes change in the distribution of each component in the resin composition (A) when heated in, for example, retort treatment or secondary processing, which results in improvement of the interlayer adhesion strength after the retort treatment. When the Vicat softening temperature is less than 40°C, the adhesion strength may not be sufficient at operating temperatures, and the Vicat softening temperature is more preferably at 50°C or higher. On the other hand, when the Vicat softening temperature is over 80°C, the interlayer adhesion strength may be decreased, and the Vicat softening temperature is more preferably at 70°C or less.

The melt flow rate (at 190°C, under a load of 2160 g) of the thermoplastic elastomer (a3) is preferably from 0.2 to 30 g/10 min. When the melt flow rate is within such ranges, the dispersibility of each component in the resin composition (A) becomes good. The melt flow rate is more preferably at 0.3 g/10 min or more. The melt flow rate is more preferably at 20 g/10 min or less.

The resin composition (A) of the present invention contains from 1 to 20 parts by mass of the thermoplastic resin (a1) and from 3 to 50 parts by mass of the thermoplastic elastomer (a3) in terms of 100 parts by mass of the polyolefin (a2).

The thermoplastic resin (a1) is blended from 1 to 20 parts by mass in terms of 100 parts by mass of the polyolefin (a2). In a case that the thermoplastic resin (a1) is blended less than 1 part by mass, the interlayer adhesion strength cannot be obtained sufficiently. The thermoplastic resin (a1) is blended preferably 2 parts by mass or more, and more preferably 3. parts by mass or more. On the other hand, in a case that the thermoplastic resin (a1) is blended more than 20 parts by mass, the resin composition (A) is embrittled to decrease the interlayer adhesion strength. The thermoplastic resin (a1) is blended preferably 15 parts by mass or less, and more preferably 10 parts by mass or less.

The thermoplastic elastomer (a3) is blended from 3 to 50 parts by mass in terms of 100 parts by mass of the polyolefin (a2). In a case that the thermoplastic elastomer (a3) is blended less than 3 parts by mass, the interlayer adhesion strength cannot be obtained sufficiently. The thermoplastic elastomer (a3) is blended preferably 5 parts by mass or more, and more preferably 10 parts by mass or more. On the other hand, in a case that the thermoplastic elastomer (a3) is blended more than 50 parts by mass, the layer of the adhesive is also easily deformed at actually used temperatures to cause difficulty for use. The thermoplastic elastomer (a3) is blended preferably 40 parts by mass or less, and more preferably 30 parts by mass or less.

To the resin composition (A), antioxidants, plasticizers, heat stabilizers, UV absorbers, antistatic agents, lubricants, colorants, fillers or other resins may be blended, unless the effect of the present invention is inhibited.

The resin composition (A) of the present invention is obtained by, for example, dry blending for mixing the thermoplastic resin (a1), the polyolefin (a2), and the thermoplastic elastomer (a3) and then melt-kneading. It is possible to use, for melt-kneading, ribbon blenders, high speed mixers co-kneaders, pelletizers, mixing rolls, extruders, intensive mixers, and the like. Among these, single-screw or twin-screw extruders are preferably used in view of simple procedures and costs. Although the temperature for melt-kneading is selected as appropriate depending on, for example, the properties of the instrument and the types and blending ratios of the thermoplastic resin (a1), the polyolefin (a2), and the thermoplastic elastomer (a3), it often falls in a range of from 150 to 300°C. In the case of the present invention, it is preferred to shape a multilayer structure by melt-kneading the thermoplastic resin (a1), the polyolefin (a2), and the thermoplastic elastomer (a3) using an extruder provided with the shaping machine, producing the resin composition (A), and subsequently, using it immediately.

A preferable application of the resin composition (A) of the present invention is adhesives, and the resin composition (A) is preferably used as a layer of an adhesive to adhere a layer of the barrier resin and a layer of the polyolefin. A preferred embodiment of the present invention is a multilayer structure including a layer of the barrier resin (B) containing the ethylene-vinyl alcohol copolymer (b1) and a layer of the polyolefin (C) laminated to each other via a layer of the resin composition (A). Using the resin composition (A) as the layer of the adhesive enables to obtain a multilayer structure having good interlayer adhesion strength.

The layer of the barrier resin (B) preferably contains an ethylene-vinyl alcohol copolymer (hereinafter abbreviated as EVOH (b1)). Since a layer of the EVOH (b1) and a layer of the polyolefin do not adhere to each other, they are usually adhered via a layer of an adhesive. The resin composition (A) of the present invention can well adhere a layer of the EVOH (b1) and a layer of the polyolefin.

The EVOH (b1) used for the multilayer structure of the present invention can be produced by a known method including copolymerizing ethylene and a vinyl ester using a radical initiator and then saponifying the resulting copolymer in the presence of an alkaline catalyst. Examples of the vinyl ester include vinyl acetate, vinyl propionate, vinyl pivalate, vinyl caprate, vinyl benzoate, and the like. Among such vinyl esters, only one ester may be used and two or more esters may also be used in combination. Among these, vinyl acetate is preferred.

Unless the object of the present invention is inhibited, copolymerization may also be performed in the presence of other copolymerizable components. Such other components include olefin-based monomers such as propylene, 1-butene and isobutene; acrylamide-based monomers such as acrylamide, N-methylacrylamide, N-ethylacrylamide and N,N-dimethylacrylamide; methacrylamide-based monomers such as methacrylamide, N-methylmethacrylamide, N-ethylacrylamide and N,N-dimethylmethacrylamide; vinyl ether-based monomers such as methyl vinyl ether, ethyl vinyl ether, n-propyl vinyl ether, isopropyl vinyl ether, tert-butyl vinyl ether and dodecyl vinyl ether; allyl alcohol; vinyltrimethoxysilane; N-vinyl-2-pyrrolidone; and the like. It should be noted that such other components does not have functional groups of at least one kind selected from the group consisting of a boronic acid group and boron-containing groups capable of being converted into a boronic acid group in the presence of water.

Although the ethylene content of the EVOH (b1) is not particularly limited, it is preferably from 5 to 60 mol%. When the ethylene content is less than 5 mol%, the melt stability may become insufficient. The ethylene content is more preferably 15 mol% or more, and even more preferably 20 mol% or more. On the other hand, when the ethylene content exceeds 60 mol%, the barrier properties may become insufficient. The ethylene content is more preferably 55 mol% or less, and even more preferably 50 mol% or less. The saponification degree of the EVOH (b1) is usually from 80 to 100 mol%, preferably from 90 to 100 mol%, more preferably from 95 to 100 mol%, even more preferably from 98 to 100 mol%, and most preferably from 99 to 100 mol%. When the saponification degree is lower than 80 mol%, the barrier properties of the EVOH (b1) may become insufficient or the thermal stability during melt-molding may become insufficient.

In the present invention, the barrier resin (B) is preferably made of the resin composition containing from 3 to 50 parts by mass of the polyamide (b2) in terms of 100 parts by mass of the EVOH (b1). Blending the polyamide (b2) enables to improve the retort resistance of the layer of the barrier resin (B). In a case that the polyamide (b2) is blended less than 3 parts by mass, the retort resistance may become insufficient, and the amount is more preferably 5 parts by mass or more, and even more preferably 7 parts by mass or more. On the other hand, in a case that the polyamide (b2) is blended more than 50 parts by mass, the gas barrier properties may deteriorate and the interlayer adhesion strength may be decreased, and the amount is more preferably 30 parts by mass or less, and even more preferably 25 parts by mass or less. The types of the polyamide (b2) is not particularly limited, and examples of the polyamide (b2) include polycaprolactam (nylon-6), polyhexamethylene adipamide (nylon-6,6), polyhexamethylene sebacamide (nylon-6,10), polyundecaneamide (nylon-11), polylaurolactam (nylon-12), or copolymer polyamides containing two or more kinds of components constituting any of the aforementioned polyamides.

The melt flow rate (MFR) (at 190°C, under a load of 2160 g) of the barrier resin (B) is preferably from 0.1 to 16 g/10 min, more preferably from 0.3 to 14 g/10 min, and even more preferably from 0.5 to 12 g/10 min. However, for such resins having a melting point around 190°C or exceeding 190°C, a MFR is defined as a value obtained by measuring at a plurality of temperatures of the melting point or higher under a load of 2160 g and plotting the results with reciprocals of absolute temperatures as abscissa against logarithms of MFRs as ordinate in a semi-logarithmic graph for extrapolation to 190°C.

Although the polyolefin (C) used for the multilayer structure of the present invention is not particularly limited, preferred examples include polyethylenes and polypropylenes. Among these, for cases of retort packaging containers and shaped articles of secondary processing, polypropylenes are preferably used. The polyolefin (C) does not have functional groups of at least one kind selected from the group consisting of a boronic acid group and boron-containing groups capable of being converted into a boronic acid group in the presence of water.

The polypropylenes used as the polyolefin (C) include homopolymers of propylene and copolymers containing propylene as a major component. "Containing as a major component" in this context means to include 50 mass% or more. Other than the homopolymers of propylene, copolymers containing monomer units, such as ethylene and α-olefin, in a small amount also may be used as such polypropylenes. To such polypropylene, other resins may also be blended, unless the effect of the present invention is inhibited. For example, it is possible to adjust mechanical properties of shaped articles by blending a small amount of polyethylene. In the same manner as so-called HIPS (High Impact Polystyrene), it is also possible to use polypropylenes to which the impact resistance is improved by adding a rubber component. The melting point of such polypropylene is preferably from 115 to 190°C. The melting point is more preferably at 120°C or higher, and even more preferably at 140°C or higher.

The polyethylenes used as the polyolefin (C) include homopolymers of ethylene and copolymers containing ethylene as a major component. "Containing as a major component" in this context means to include 50 mass% or more. As such polyethylenes, high density polyethylenes, low density polyethylenes, linear low-density polyethylenes, and the like can be used according to the applications.

Further, it is also possible to use recovered resin compositions obtained by melt-kneading scraps of a multilayer structure including a layer of the polyolefin (C). The content of the polyolefin (C) in such cases is usually 50 mass% or more. Further, fillers and various additives may also be blended to the polyolefin (C), unless the effect of the present invention is inhibited.

The Vicat softening temperature (measured in accordance with JIS K 7206) of the polyolefin (C) is preferably over 80°C. When the Vicat softening temperature is at 80°C or less, the layer of the polyolefin (C) may be deformed and may cause difficulty for use depending on the applications, and thus the Vicat softening temperature is more preferably at 90°C or higher. Considering molding workabilitly, the Vicat softening temperature is usually at 200°C or less.

When the melt flow rate greatly differs from that of the polyolefin (a2) used for the layer of an adhesive, defects in appearance tends to occur when producing a multilayer structure of the present invention, and therefore, the melt flow rate (at 230°C, under a load of 2160 g) of the polypropylene used as the polyolefin (C) is preferably from 0.2 to 70 g/10 min. The melt flow rate is more preferably 0.5 g/10 min or more. The melt flow rate is more preferably 50 g/10 min or less.

When the melt flow rate greatly differs from that of the polyolefin (a2) used for the layer of an adhesive, defects in appearance tends to occur when producing a multilayer structure of the present invention, and therefore, the melt flow rate (at 190°C, under a load of 2160 g) of the polyethylene used as the polyolefin (C) is preferably from 0.2 to 70 g/10 min. The melt flow rate is more preferably 0.5 g/10 min or more. The melt flow rate is more preferably 50 g/10 min or less.

As a method for producing a multilayer structure of the present invention, it is possible to adopt a known method and to use a method such as coextruding, coinjecting, and extrusion coating. In view of versatility and adhesiveness, coextrusion or coinjection is preferred. When coextruding or coinjecting, it is possible to feed the barrier resin (B), the polyolefin (C), and the resin composition (A) each to a shaping machine. A preferable embodiment of the present invention is to produce the resin composition (A) by feeding a mixture of the thermoplastic resin (a1), the polyolefin (a2), and the thermoplastic elastomer (a3) to a shaping machine for the resin composition (A) in coextrusion or coinjection, and to subsequently produce the multilayer structure at the same time.

The layer constitution of the multilayer structure of the present invention is not particularly limited as long as a layer of the barrier resin (B) and a layer of the polyolefin (C) are laminated to each other via a layer of the resin composition (A). Examples of the layer constitution include B/A/C, C/A/B/A/C, C/A/B/A/T, C/A/B/T, and the like. Here, A, B, C, and T respectively represent a layer of the resin composition (A), a layer of the barrier resin (B), a layer of the polyolefin (C), a layer of metal foil, paper, cloth, a thermoplastic resin other than the resin composition (A), the barrier resin (B), and the polyolefin (C), or the like. The C layer may be constituted of a plurality of layers, and for example, a layer of a recovered resin composition containing a polyolefin as a major component and a layer of a brand-new polyolefin that are laminated to each other can be defined as the C layer. The thicknesses of the individual layers of the multilayer structure may optionally be selected. Such selection allows the total thickness of the multilayer structure to fall within a desired range.

The multilayer structure of the present invention is excellent in interlayer adhesion strength. Good adhesion is exhibited in either interface of the interface between the layer of the resin composition (A) and the layer of the polyolefin (C) and the interface between the layer of the resin composition (A) and the layer of the barrier resin (B).

Multilayer structures thus obtained by melt-molding are preferably subjected further to secondary processing. The secondary processing means that a multilayer structure obtained by melt-molding, such as coextrusion or coinjection, is further processed for shaping. Specific examples of such secondary processing include stretching processes such as uniaxial stretching, biaxial stretching and blow stretching, thermoforming processes such as vacuum forming, pressure forming, drape forming, and plug-assist forming, and the like. By carrying out such secondary processing using the multilayer structure of the present invention, it is possible to obtain shaped articles of secondary processing, such as films, sheets, bottles, and cups, that are excellent in mechanical properties and gas barrier properties.

Among the shaped articles of secondary processing, stretched films and thermoformed articles are preferred embodiments. For the stretched films, biaxially stretched films are preferred and multilayer films stretched at 5 times or more, more preferably at a ratio as high as 8 times or more, as the area ratio are preferred embodiments. For the thermoformed articles, particularly shaped articles of deep drawing and specifically thermoformed articles having a depth (drawn ratio: S) relative to the diameter of the opening of 0.5 times or more, more preferably 0.7 times or more are preferred embodiments. In a case of this opening not being circular, the circle-equivalent diameter is defined as the diameter.

Preferred multilayer structures to obtain shaped articles of secondary processing are multilayer structures in which the layer of the polyolefin (C) is a layer of a polypropylene and the layer of the barrier resin (B) is a layer of an EVOH. This is because polypropylenes are excellent in workability for secondary processing, mechanical properties, and stretchability. The polyolefin (a2) contained in the layer of the resin composition (A) to obtain shaped articles of secondary processing may be polypropylenes or polyethylenes.

In a case that the polyolefin (a2) contained in the layer of the resin composition (A) is polypropylenes, it is possible to exhibit good adhesion, even when high ratio stretching is carried out, in either interface of the interface between the resin composition (A) layer and the polyolefin (C) layer and the interface between the resin composition (A) layer and the barrier resin (B) layer. Thus, they are preferably adopted when obtaining films stretched at high ratios and thermoformed articles of deep drawing.

On the other hand, in a case that the polyolefin (a2) contained in the layer of the resin composition (A) is polyethylenes, the secondary processing is preferably performed at a temperature of the melting point of such a polyethylene or higher, and thereby the interlayer adhesion after secondary processing becomes good. Although the reason for this is not quite clear, the decrease in adhesion during secondary processing appears to be suppressed by melting the polyethylene in the resin composition (A). The temperature for the secondary processing is more preferably a temperature higher than the melting point of the polyethylene by 5 °C or more, and even more preferably a temperature higher than the melting point of the polyethylene by 10°C or more.

In order to keep a good appearance of the shaped articles, the secondary processing is preferably performed at a temperature lower than the melting point of the polyolefin (C). It is more preferred at a temperature lower than the melting point of the polyolefin (C) by 5°C or more, and even more preferred at a temperature lower than the melting point of the polyolefin (C) by 10°C or more. However, there are cases that the secondary shaping is possible even at a temperature of the melting point of the polyolefin (C) or higher as long as the temperature is lower than the melting point of the barrier resin (B), and in such cases, the upper limit of the preferred temperature for the secondary processing is a temperature higher than the melting point of the polyolefin (C) by 20°C.

One of the preferred applications of multilayer structures of the present invention is retort packaging containers. Since occurrence of "orange peel" in the retort packaging containers of the present invention is suppressed, it is possible to obtain containers having a good appearance.

Multilayer structures suitable for the retort packaging containers of the present invention are multilayer structures in which a layer of the polyolefin (C) is a layer of a polypropylene and a layer of the barrier resin (B) is a layer of the EVOH. This is because polypropylenes are excellent in hot water resistance and mechanical properties. The polyolefin (a2) contained in the layer of the resin composition (A) is preferably polypropylenes. When the polyolefin (a2) is polyethylenes, it is difficult for the layer of the resin composition (A) to resist the heat during retort treatment.

The multilayer structures of the present invention can be used for various applications including the aforementioned retort packaging containers. For example, they are useful for applications where barrier properties are required such as materials for packaging foods, materials for packaging medical items (drugs and medical appliances) and fuel tanks.

### Example

The present invention is described in more detail below by way of Examples and Comparative Examples.

### Synthesis Example 1

A hydrogenated product of a styrene-butadiene-styrene triblock copolymer (styrene/butadiene = 16/84 (mass ratio), hydrogenation percentage of butadiene units = 94%, amount of double bonds = 960 µeq/g, MFR (at 230°C, under a load of 2160 g) = 5 g/10 min) was fed to a twin-screw extruder at a rate of 7 kg/hr while purging the feed port with 1 L/min nitrogen. Subsequently, while feeding a mixed liquid of borane-triethylamine complex (TEAB) and boronic acid 1,3-butanediol ester (BBD) (TEAB/BBD = 29/71, mass ratio) from a liquid feeder 1 at a rate of 0.6 kg/hr and 1, 3-butanediol from a liquid feeder 2 at a rate of 0.4 kg/hr, melt-kneading was carried out continuously. During the kneading, the pressure was regulated so that the gauges at a vent 1 and a vent 2 indicated approximately 20 mmHg. As a result, a hydrogenated product of a styrene-butadiene-styrene triblock copolymer containing boronic acid 1,3-butanediol ester groups (hereinafter referred to as a thermoplastic resin (a1-1)) was obtained as pellets from the discharge port at a rate of 7 kg/hr. The thermoplastic resin (a1-1) contained boronic acid 1,3-butanediol ester groups in an amount of 650 µeq/g and double bonds in an amount of 115 µeq/g, and had the melt flow rate (at 190°C, under a load of 2160 g) of 1.6 g/10 min.

The constitution and operating conditions of the twin-screw extruder used for the reaction are as follows:
Co-rotating twin-screw extruder TEM-35B (manufactured by Toshiba Machine Co., Ltd.)
Screw diameter: 37 mmφ
L/D: 52 (15 blocks)
Liquid feeder: C3 (Liquid feeder 1), C11 (Liquid feeder 2)
Vent position: C6 (Vent 1), C14 (Vent 2)
Constitution of screw: Seal rings were used between C5 and C6, between C10 and C11, and at C12.
Cylinder setting temperature: C1 (water cooling), C2-C3 (200°C), C4-C15 (250°C), die (250°C)
Screw rotation speed: 400 rpm

### Example 1

Pellets of the thermoplastic resin (a1-1) obtained in Synthesis Example 1, pellets of linear low-density polyethylene "NOVATEC UF641" (trade name, an ethylene-1-hexene copolymer polymerized with a Ziegler catalyst, melting point = 122°C, MFR (at 190°C, under a load of 2160 g) = 2.1 g/10 min, Vicat softening temperature = 105°C, density = 0. 927 g/cm³; hereinafter referred to as a polyolefin (a2-1)) produced by Japan Polyethylene Corporation, and pellets of a thermoplastic polyolefin-based elastomer "TAFMER P0480" (trade name, an ethylene-propylene copolymer, MFR (at 190°C, under a load of 2160 g) = 1.0 g/10 min, Vicat softening temperature = 54 °C, density = 0.87 g/cm³; hereinafter referred to as a thermoplastic elastomer (a3-1)) produced by Mitsui Chemicals, Inc. were dry-blended using a tumbler at 4/76/20 as a mass ratio of thermoplastic resin (a1-1) / polyolefin (a2-1) / thermoplastic elastomer (a3-1), yielding a mixture of the pellets.

Next, polypropylene "NOVATEC EA7A" (trade name, melting point = 161°C, MFR (at 230°C, under a load of 2160 g) = 1.4 g/10 min; hereinafter referred to as a polyolefin (C-1)) produced by Japan Polypropylene Corporation, the above pellet mixture, and "EVAL H171B" (trade name, an ethylene-vinyl alcohol copolymer, ethylene content = 38 mol%, melting point = 170°C, MFR (at 190°C, under a load of 2160 g) = 1.6 g/10 min, saponification degree = 99.8 mol% or more; hereinafter referred to as a barrier resin (B-1)) produced by Kuraray Co., Ltd. were provided as raw materials and were introduced into separate extruders, respectively. Then, a 3-kind 5-layer multilayer film of polyolefin (C-1) / resin composition (A) / barrier resin (B-1) / resin composition (A) / polyolefin (C-1) was produced by coextrusion according to the conditions shown below. The thickness distribution of the resulting multilayer film was 50/10/10/10/50 µm.

The constitution and operating conditions of the coextrusion machine are as follows.

### Extruder 1 [polyolefin (C-1)]:

Instrument: single-screw extruder "GT-32-A type" manufactured by Research Laboratory of Plastic Technology Co., Ltd.
Screw diameter: 32 mmφ
Screw rotation speed: 62 rpm
Cylinder setting temperature: 220°C
Extruder 2 [resin composition (A): mixture of thermoplastic resin (a1-1) / polyolefin (a2-1) / thermoplastic elastomer (a3-1)]:
Instrument: single-screw extruder "P25-18AC" manufactured by Osaka Seiki Kosaku Kabushiki Kaisha
Screw diameter: 25 mmφ
Screw constitution: fullflight
L/D: 18
Screw rotation speed: 30 rpm
Cylinder setting temperature: 220°C
Extruder 3 [barrier resin (B-1)]:
Instrument: single-screw extruder "Labo ME-type CO-NXT" manufactured by Toyo Seiki Seisaku-sho, Ltd.
Screw diameter: 20 mmφ
Screw rotation speed: 18 rpm
Cylinder setting temperature: 220°C
Die size: 300 mm,
Film taking-off rate: 4 m/min
Temperature of cooling roll: 60°C

The T-type peel strength in the interface between the polyolefin (C-1) layer and the resin composition (A) layer and in the interface between the resin composition (A) layer and the barrier resin (B-1) layer of the resulting multilayer film immediately after the film production was measured with an Autograph (tensile speed = 250 mm/min) at 20°C and 65 %RH. The obtained value was defined as interlayer adhesion strength. The interlayer adhesion strength of the first interface was 1500 g/15 mm, and that of the second interface was 1200 g/15 mm. The evaluated results are shown in Table 1.

### Example 2

A 3-kind 5-layer multilayer film was produced by coextrusion in the same manner as in Example 1, other than using high-pressure low density polyethylene "Suntec L2340" (trade name, density = 0.923 g/cm³, melting point = 112°C, Vicat softening temperature = 96°C, MFR (at 190°C, under a load of 2160 g) = 3.8 g/10 min; hereinafter referred to as a polyolefin (a2-2)) produced by Asahi Kasei Chemicals Corporation, instead of the polyolefin (a2-1) in Example 1, to measure the T-type peel strength. The results are shown in Table 1.

### Comparative Example 1

A 3-kind 5-layer multilayer film was produced by coextrusion in the same manner as in Example 1, other than dry blending pellets of the thermoplastic resin (a1-1) and pellets of the polyolefin (a2-1) using a tumbler at 4/96 as a mass ratio of thermoplastic resin (a1-1) / polyolefin (a2-1), without using the thermoplastic elastomer (a3-1), yielding a mixture of pellets in Example 1, to measure the T-type peel strength. The results are shown in Table 1.

### Comparative Example 2

A 3-kind 5-layer multilayer film was produced by coextrusion in the same manner as in Example 1, other than dry blending pellets of the thermoplastic resin (a1-1) and pellets of the polyolefin (a2-2) using a tumbler at 4/96 as a mass ratio of thermoplastic resin (a1-1) / polyolefin (a2-2), without using the thermoplastic elastomer (a3-1), yielding a mixture of pellets in Example 2, to measure the T-type peel strength. The results are shown in Table 1.

**Table 1**

| | Resin composition (A) | | | | | a1/a2/a3 (mass ratio) | Interlayer adhesion strength | |
|---|---|---|---|---|---|---|---|---|
| | Thermoplastic resin (a1) | Polyolefin (a2) | | Thermoplastic elastomer (a3) | | | (C-1) ^{*1)} (g/15 mm) | (B-1) ^{*2)} (g/15 mm) |
| | Type | Type | Density (g/cm³) | Type | Vicat softening temperature (°C) | | | |
| Example 1 | a1-1 | a2-1 | 0.927 | a3-1 | 54 | 4/76/20 | 1500 | 1200 |
| Example 2 | a1-1 | a2-2 | 0.923 | a3-1 | 54 | 4/76/20 | 1100 | 1000 |
| Comparative Example 1 | a1-1 | a2-1 | 0.927 | - | - | 4/96/0 | 250 | 980 |
| Comparative Example 2 | a1-1 | a2-2 | 0.923 | - | - | 4/96/0 | 100 | 160 |

| | | | | | | | | |
|---|---|---|---|---|---|---|---|---|
| *1) Adhesion strength in the interface between the polyolefin (C-1) layer and the resin composition (A) layer *2) Adhesion strength in the interface between the barrier resin (B-1) layer and the resin composition (A) layer a2-1: "NOVATEC UF641" (trade name, linear low-density polyethylene produced by Japan Polyethylene Corporation) a2-2: "Suntec L2340" (trade name, high-pressure low density polyethylene produced by Asahi Kasei Chemicals Corporation) a3-1: "TAFMER P0480" (trade name, an ethylene-propylene copolymer produced by Mitsui Chemicals, Inc., density = 0.87 g/cm³) | | | | | | | | |

As shown in Table 1, in Examples 1 and 2 where the resin composition (A) was used, as an adhesive layer, which contains the thermoplastic elastomer (a3) in addition to the thermoplastic resin (a1) having boron-containing functional groups and the polyolefin (a2), good adhesion strength was exhibited in either interface of the interface between the resin composition (A) layer and the polyolefin (C-1) layer and the interface between the resin composition (A) layer and the barrier resin (B-1) layer. In contrast, in Comparative Examples 1 and 2 where the resin composition (A) was used, as an adhesive layer, which contains the thermoplastic resin (a1) having boron-containing functional groups and the polyolefin (a2) only, the interlayer adhesion strength in either interface was decreased.

### Example 3

Pellets of the thermoplastic resin (a1-1) obtained in Synthesis Example 1, pellets of polypropylene "NOVATEC EG7F" (trade name, density = 0.900 g/cm³, melting point = 142°C, MFR (at 230°C, under a load of 2160 g) = 1.3 g/10 min; hereinafter referred to as a polyolefin (a2-3)) produced by Japan Polypropylene Corporation, and pellets of the thermoplastic elastomer (a3-1) were dry-blended using a tumbler at 5/75/20 as a mass ratio of thermoplastic resin (a1-1) / polyolefin (a2-3) / thermoplastic elastomer (a3-1), yielding a mixture of the pellets.

Next, polypropylene "NOVATEC EG7F" produced by Japan Polypropylene Corporation (Although being identical to the polyolefin (a2-3) used as a structural component of the resin composition (A) in the present Example, this is used here as a layer of the multilayer structure. In such a case, it is hereinafter referred to as a polyolefin (C-2).), the above pellet mixture, and "EVAL LR101" (trade name, a resin composition containing 90 parts by mass of an ethylene-vinyl alcohol copolymer, having 27 mol% of ethylene content, a melting point of 188 °C, and 99.8 mol% or more of saponification degree, and 10 parts by mass of polycaprolactam (nylon-6) having a melting point of 222°C, MFR (at 230°C, under a load of 2160 g) = 10 g/10 min; hereinafter referred to as a barrier resin (B-2)) produced by Kuraray Co., Ltd. were provided as raw materials and were introduced into separate extruders, respectively. Then, according to the conditions shown below, a 3-kind 5-layer multilayer film of polyolefin (C-2) / resin composition (A) / barrier resin (B-2)) / resin composition (A) / polyolefin. (C-2) was produced by coextrusion according to the conditions same as Example 1. The thickness distribution of the resulting multilayer film was 50/10/10/10/50 µm.

There were no "orange peel" and unevenness occurred in the resulting multilayer film, and the film had a good appearance. Besides, the T-type peel strength in the interface between the resin composition (A) layer and the barrier resin (B-2) layer of the resulting multilayer film immediately after the film production was measured with an Autograph (tensile speed = 250 mm/min) at 20°C and 65 %RH. The obtained value was defined as interlayer adhesion strength. The interlayer adhesion strength was 390 g/15 mm. Further, the resulting multilayer film was subjected to retort treatment at 120°C for 30 minutes. The T-type peel strength of the multilayer film after the process was measured in the same manner as in the case of the multilayer film before the process and it was 700 g/15 mm. The results are shown in Table 2.

### Comparative Example 3

A 3-kind 5-layer multilayer film was produced by coextrusion in the same manner as in Example 3, other than dry blending pellets of the thermoplastic resin (a1-1) and pellets of the polyolefin (a2-3) using a tumbler at 5/95 as a mass ratio of thermoplastic resin (a1-1) / polyolefin (a2-3), without using the thermoplastic elastomer (a3-1), yielding a mixture of pellets in Example 3, to measure the T-type peel strength between the resin composition layer and the barrier resin (B-2) layer before and after the retort treatment. The results are shown in Table 2.

### Comparative Example 4

A 3-kind 5-layer multilayer film was produced by coextrusion in the same manner as in Example 3, other than making the mass ratio of thermoplastic resin (a1-1) / polyolefin (a2-3) / thermoplastic elastomer (a3-1) as 5/45/50 in Example 3 to measure the T-type peel strength between the resin composition layer and the barrier resin (B-2) layer before and after the retort treatment. The results are shown in Table 2.

### Synthesis Example 2

A separable flask having an internal volume of 5000 mL was charged with 600 g of polypropylene "E-105GM" (trade name, MFR (at 230°C, under a load of 2160 g) = 0.5 g/10 min)) produced by Idemitsu Kosan Co., Ltd., 69.91 g of maleic anhydride, and 2000 g of tert-butyl benzene and was purged with a nitrogen atmosphere, and then they were dissolved at 160°C. Subsequently, a solution in which 10.21 g of di-tert-butyl peroxide was dissolved in 100 g of tert-butyl benzene was added for reaction for two hours while stirring. By cooling the reacted mixed liquid to room temperature while stirring, a powder resin was precipitated. The precipitation was recovered by filteration and washed with acetone, and then dried under reduced pressure, and thereby yielding 660.3 g of a polypropylene modified with maleic anhydride (hereinafter referred to as a thermoplastic resin (a1-2)) as white powder. The resulting thermoplastic resin (a1-2) was titrated using a 0.25 N potassium hydroxide / ethanol solution to determine the acid value. The determined value was 22.4 KOH mg/g and the MFR (at 230°C, under a load of 2160 g) was 25 g/10 min.

### Comparative Example 5

A 3-kind 5-layer multilayer film was produced by coextrusion in the same manner as in Example 3, other than using the thermoplastic resin (a1-2) obtained in Synthesis Example 2 instead of the thermoplastic resin (a1-1) and making a mass ratio of thermoplastic resin (a1-2) / polyolefin (a2-3) / thermoplastic elastomer (a3-1) as 15/65/20 in Example 3, to measure the T-type peel strength between the resin composition layer and the barrier resin (B-2) layer before and after the retort treatment. The results are shown in Table 2.

**Table 2**

| | Resin composition (A) | | | | | a1/a2/a3 (mass ratio) | Interlayer adhesion strength | | Orange peel |
|---|---|---|---|---|---|---|---|---|---|
| | Thermoplastic resin (a1) | Polyolefin (a2) | | Thermoplastic elastomer (a3) | | | (B-2) ^{1*)} (g/15 mm) | | |
| | Type | Type | Density (g/cm³) | Type | Vicat softening temperature (°C) | | Before retort | After retort | |
| Example 3 | a1-1 | a2-3 | 0.900 | a3-1 | 54 | 5/75/20 | 390 | 700 | Not occured |
| Comparative Example 3 | a1-1 | a2-3 | 0.900 | - | - | 5/95/0 | 40 | 400 | Not occured |
| Comparative Example 4 | a1-1 | a2-3 | 0.900 | a3-1 | 54 | 5/45/50 | 700 | 0 | Not occured |
| Comparative Example 5 | a1-2 | a2-3 | 0.900 | a3-1 | 54 | 15/65/20 | 950 | 890 | Occured |

| | | | | | | | | | |
|---|---|---|---|---|---|---|---|---|---|
| *1) Adhesion strength in the interface between the barrier resin (B-2) layer and the resin composition (A) layer. a2-3: "NOVATEC EG7F" (trade name, polypropylene produced by Japan Polypropylene Corporation) a3-1: "TAFMER P0480" (trade name, an ethylene-propylene copolymer produced by Mitsui Chemicals, Inc., density = 0.87 g/cm³) | | | | | | | | | |

As shown in Table 2, in Example 3 where the resin composition (A) is used, as an adhesive layer, which contains thermoplastic resin (a1-1) / polyolefin (a2-3) / thermoplastic elastomer (a3-1) at a specific mass ratio, the interlayer adhesion strength was increased after retort treatment. Thus, the interlayer adhesion strength was relatively low before retort treatment, and thereby it was possible to suppress the occurrence of orange peel. In contrast, in Comparative Example 3 where the resin composition (A) was used, as an adhesive layer, which contains the thermoplastic resin (a1-1) and the polyolefin (a2-3) only, the interlayer adhesion strength became insufficient. Moreover, in Comparative Example 4 where the thermoplastic elastomer (a3-1) was blended too much, although the interlayer adhesion strength was sufficient before retort treatment, the interlayer adhesion strength was severely decreased after retort treatment. Furthermore, in Comparative Example 5 where the thermoplastic resin (a1-2) was used instead of the thermoplastic resin (a1-1), the interlayer adhesion strength before retort treatment had to be high in order to have an appropriate value of the interlayer adhesion strength after retort treatment, and as a result, orange peel was occurred during melt-extrusion molding and the appearance of the resulting multilayer structure was deteriorated.

### Example 4

(1) Pellets of the thermoplastic resin (a1-1), pellets of linear low-density polyethylene "ULTZEX 1020L" (trade name, an ethylene-4-methyl-1-pentene copolymer polymerized with a Ziegler catalyst, melting point = 115°C, MFR (at 190°C, under a load of 2160 g) = 2.0 g/10 min, density = 0.909 g/cm³; hereinafter referred to as a polyolefin (a2-4)) produced by Prime Polymer Co., Ltd., and pellets of polyolefin-based thermoplastic elastomer "TAFMER A4085" (trade name, an ethylene-1-butene copolymer, density = 0.885 g/cm³, Vicat softening temperature = 55°C, MFR (at 190°C, under a load of 2160 g) 3.6 g/10 min; hereinafter referred to as a thermoplastic elastomer (a3-2)) produced by Mitsui Chemicals, Inc. were dry-blended using a tumbler at 4/76/20 as a mass ratio of thermoplastic resin (a1-1) / polyolefin (a2-4) / thermoplastic elastomer (a3-2), yielding a mixture of the pellets.

(2) Next, the polyolefin (C-1), the above pellet mixture, and the barrier resin (B-1) were provided as raw materials and were introduced into separate extruders, respectively. Then, a 3-kind 5-layer multilayer sheet of polyolefin (C-1) / resin composition (A) / barrier resin (B-1) / resin composition (A) / polyolefin (C-1) was produced by coextrusion according to the conditions shown below. The thickness distribution of the resulting multilayer sheet was 225/90/90/90/225 µm.

The constitution and operating conditions of the coextrusion machine are as follows.
Extruder 1 [polyolefin (C-1)]:
Instrument: single-screw extruder "GT-32-A type" manufactured by Research Laboratory of Plastic Technology Co., Ltd.
Screw diameter: 32 mmφ
Screw rotation speed: 70 rpm
Cylinder setting temperature: 220°C
Extruder 2 [resin composition (A): mixture of thermoplastic resin (a1-1) / polyolefin (a2-4) / thermoplastic elastomer (a3-2)]:
Instrument: single-screw extruder "P25-18AC" manufactured by Osaka Seiki Kosaku Kabushiki Kaisha
Screw diameter: 25 mmφ
Screw constitution: fullflight
L/D: 18
Screw rotation speed: 70 rpm
Cylinder setting temperature: 220°C
Extruder 3 [barrier resin (B-1)]:
Instrument: single-screw extruder "Labo ME-type CO-NXT" manufactured by Toyo Seiki Seisaku-sho, Ltd.
Screw diameter: 20 mmφ
Screw rotation speed: 40 rpm
Cylinder setting temperature: 220°C
Die size: 300 mm,
Sheet taking-off rate: 1 m/min
Temperature of cooling roll: 60°C

(3) The multilayer sheet obtained in the above (2) was put into a pantographic biaxial stretching machine manufactured by Toyo Seiki Seisaku-sho, Ltd. to carry out simultaneous biaxial stretching. It was stretched at stretching temperatures of 135°C and 105°C, and at stretching ratios of 3.0 x 3.0 times and 2.0 x 2.0 times respectively. In either case, the stretching speed was 1 m/sec.

(4) The T-type peel strength in the interfaces between the polyolefin (C-1) layer and the resin composition (A) layer and between the resin composition (A) layer and the barrier resin (B-1) layer of the resulting multilayer stretched film immediately after the film production was measured with an Autograph (tensile speed = 250 mm/min) at 20°C and 65 %RH. The obtained value was defined as interlayer adhesion strength. The results are shown in Table 3.

### Comparative Example 6

A 3-kind 5-layer multilayer sheet was produced by coextrusion in the same manner as in Example 4(2), other than dry blending pellets of the thermoplastic resin (a1-1) and pellets of the polyolefin (a2-4) using a tumbler at 4/96, without using the thermoplastic elastomer (a3-2), yielding a mixture of pellets in Example 4(1), and thus a multilayer stretched film was produced in the same manner as Example 4(3), to measure the T-type peel strength in the same manner as Example 4(4). The results are shown in Table 3.

### Example 5

Using the polyolefin (a2-3) instead of the polyolefin (a2-4), using the thermoplastic elastomer (a3-1) instead of the thermoplastic elastomer (a3-2), thermoplastic resin (a1-1) / polyolefin (a2-3) / thermoplastic elastomer (a3-1) were dry blended using a tumbler at 5/75/20 as a mass ratio in Example 4(1), yielding a mixture of pellets. Next, in the same manner as Example 4(2), a 3-kind 5-layer multilayer sheet was produced by coextrusion. The resulting multilayer sheet was stretched in the same manner as Example 4(3), however at a stretching temperature of 120°C, at a stretching rate of 1 m/sec, and at a stretching ratio of 4.0 x 4.0 times to produce a multilayer stretched film, and thus the T-type peel strength was measured in the same manner as Example 4(4). The results are shown in Table 3.

### Comparative Example 7

A 3-kind 5-layer multilayer sheet was produced by coextrusion in the same manner as in Example 5, other than dry blending thermoplastic resin (a1-1) / polyolefin (a2-3) using a tumbler at 5/95 as a mass ratio, without using the thermoplastic elastomer (a3-1), yielding a mixture of pellets in Example 5, and thus a multilayer stretched film was produced to measure the T-type peel strength. The results are shown in Table 3.

### Comparative Example 8

A 3-kind 5-layer multilayer sheet was produced by coextrusion in the same manner as in Example 5, other than using the thermoplastic resin (a1-2) instead of the thermoplastic resin (a1-1) and making thermoplastic resin (a1-2) / polyolefin (a2-3) / thermoplastic elastomer (a3-1) using a tumbler at 15/65/20 as a mass ratio in Example 5, and thus a multilayer stretched film was produced to measure the T-type peel strength. The results are shown in Table 3.

**Table 3**

| | Resin composition (A) | | | | | a1/a2/a3 (mass ratio) | Stretching condition | | Interlayer adhesion strength | |
|---|---|---|---|---|---|---|---|---|---|---|
| | Thermoplastic resin (a1) | Polyolefin (a2) | | Thermoplastic elastomer (a³) | | | Stretching temperature (°C) | Stretching ratio (times) | (C-1) ^{*1)} (g/15 mm) | (B-1) ^{*2)} (g/15 mm) |
| | Type | Type | Density (g/cm³) | Type | Vicat softening temperature (°C) | | | | | |
| Example 4 | a1-1 | a2-4 | 0.909 | a3-2 | 55 | 4/76/20 | 135 | 3 x 3 | Unpeelable | 500 |
| | | | | | | | 135 | 2 x 3 | Unpeelable | 1370 |
| | | | | | | | 105 | 3 x 3 | Unpeelable | 400 |
| | | | | | | | 105 | 2 x 2 | Unpeelable | 970 |
| Comparative Example 6 | a1-1 | a2-4 | 0.909 | - | - | 4/96/0 | 135 | 3 x 3 | Unpeelable | 350 |
| | | | | | | | 135 | 2 x 2 | Unpeelable | 1000 |
| | | | | | | | 105 | 3 x 3 | Unpeelable | 30 |
| | | | | | | | 105 | 2 x 2 | Unpeelable | 40 |
| Example 5 | a1-1 | a2-3 | 0.900 | a3-1 | 54 | 5/75/20 | 120 | 4 x 4 | Unpeelable | 130 |
| Comparative Example 7 | a1-1 | a2-3 | 0.900 | - | - | 5/95/0 | 120 | 4 x 4 | Unpeelable | 80 |
| Comparative Example 8 | a1-2 | a2-3 | 0.900 | a3-1 | 54 | 15/65/20 | 120 | 4 x 4 | Unpeelable | 30 |

| | | | | | | | | | | |
|---|---|---|---|---|---|---|---|---|---|---|
| *1) Adhesion strength in the interface between the polyolefin (C-1) layer and the resin composition (A) layer. *2) Adhesion strength in the interface between the barrier resin (B-1) layer and the resin composition (A) layer. a2-3: "NOVATEC EG7F" (trade name, polypropylene produced by Japan Polypropylene Corporation) a2-4: "ULTZEX 1020L" (trade name, linear low-density polyethylene produced by Prime Polymer Co. , Ltd.) a3-1: "TAFMER P0480" (trade name, an ethylene-propylene copolymer produced by Mitsui Chemicals, Inc., density = 0.87 g/cm³) a3-2: "TAFMER A4085" (trade name, an ethylene-butene copolymer produced by Mitsui Chemicals, Inc., density = 0.885 g/cm³) | | | | | | | | | | |

As shown in Table 3, in Example 4 where the resin composition (A) was used, as an adhesive layer, which contains the thermoplastic elastomer (a3-2) in addition to the thermoplastic resin (a1-1) and the polyolefin (a2-4) at a specific mass ratio, the interlayer adhesion strength was good in either interface of the interface between the resin composition (A) layer and the polyolefin (C-1) layer and the interface between the resin composition (A) layer and the barrier resin (B-1) layer. In contrast, in Comparative Example 6 where the resin composition (A) was used, as an adhesive layer, which contains the thermoplastic resin (a1-1) and the polyolefin (a2-4) only, the interlayer adhesion strength was decreased in the interface between the resin composition (A) layer and the barrier resin (B-1) layer. That was similar in the contrast between Example 5, where the thermoplastic resin (a1-1), the polyolefin (a2-3), and the thermoplastic elastomer (a3-1) were used as structural components of the resin composition (A), and Comparative Example 7, where the thermoplastic elastomer (a3-1) was not used. In addition, in Comparative Example 8 where the thermoplastic resin (a1-2) was used instead of the thermoplastic resin (a1-1), the interlayer adhesion strength was decreased in the interface between the resin composition layer and the barrier resin (B-1) layer.

### Example 6

(1) Pellets of the thermoplastic resin (a1-1), pellets of linear low-density polyethylene "ULTZEX 2022L" (trade name, an ethylene-4-methyl-1-pentene copolymer polymerized with a Ziegler catalyst, density = 0.919 g/cm³, melting point = 120°C, MFR (at 190°C, under a load of 2160 g) = 2.0 g/10 min; hereinafter referred to as a polyolefin (c2-5)) produced by Prime Polymer Co., Ltd., and pellets of the thermoplastic elastomer (a3-1) were dry-blended using a tumbler at 4/76/20 as a mass ratio of thermoplastic resin (a1-1) / polyolefin (a2-5) / thermoplastic elastomer (a3-1), yielding a mixture of the pellets.

(2) Next, polypropylene "NOVATEC FY6C" (trade name, melting point = 168°C, MFR (at 230°C, under a load of 2160 g) = 2.4 g/10 min; hereinafter referred to as a polyolefin (C-3)) produced by Japan Polypropylene Corporation, the above pellet mixture, and the barrier resin (B-1) were provided as raw materials and were introduced into separate extruders, respectively. Then, a 3-kind 5-layer multilayer sheet of polyolefin (C-3) / resin composition (A) / barrier resin (B-1) / resin composition (A) / polyolefin (C-3) was produced by coextrusion according to the conditions shown below. The thickness distribution of the resulting multilayer sheet was 200/50/50/50/200 µm.

The constitution and operating conditions of the coextrusion machine are as follows.
Extruder 1 [polyolefin (C-3)]:
Instrument: single-screw extruder "GT-32-A type" manufactured by Research Laboratory of Plastic Technology Co., Ltd.
Screw diameter: 32 mmφ
Screw rotation speed: 70 rpm
Cylinder setting temperature: 220°C
Extruder 2 [resin composition (A): mixture of thermoplastic resin (a1-1) / polyolefin (a2-5) / thermoplastic elastomer (a3-1)]:
Instrument: single-screw extruder "P25-18AC" manufactured by Osaka Seiki Kosaku Kabushiki Kaisha
Screw diameter: 25 mmφ
Screw constitution: fullflight
L/D: 18
Screw rotation speed: 70 rpm
Cylinder setting temperature: 220°C
Extruder 3 [barrier resin (B-1)]:
Instrument: single-screw extruder "Labo ME-type CO-NXT" manufactured by Toyo Seiki Seisaku-sho, Ltd.
Screw diameter: 20 mmφ
Screw rotation speed: 40 rpm
Cylinder setting temperature: 220°C
Die size: 300 mm,
Sheet taking-off rate: 1 m/min
Temperature of cooling roll: 60°C

(3) The multilayer sheet obtained in the above (2) was thermoformed in a thermoformer (manufactured by Asano Laboratories Co., Ltd.: a vacuum pressure deep drawing shaping machine, type FX-0431-3) at a sheet temperature of 130°C using compressed air (atomospheric pressure of 5 kgf/cm²) into the form of a round cup (die form: upper portion = 75 mmφ, lower portion = 60 mmφ, depth = 75 mm, drawn ratio S = 1.0), yielding a thermoformed container. The shaping conditions are shown below.
Temperature of heater: 400°C
Plug: 45 φ x 65 mm
Temperature of plug: 120°C
Temperature of die: 70°C

(4) The resulting thermoformed article of deep drawing was cut to a width of 15 mm in the direction of drawing, and then the T-type peel strength in the interfaces between the polyolefin (C-3) layer and the resin composition (A) layer and between the resin composition (A) layer and the barrier resin (B-1) layer on a side face immediately after thermoforming was measured with an Autograph (tensile speed = 250 mm/min) at 20°C and 65 %RH. The obtained value was defined as interlayer adhesion strength. The results are shown in Table 4.

### Comparative Example 9

A 3-kind 5-layer multilayer sheet was produced by coextrusion in the same manner as in Example 6(2), other than dry blending pellets of the thermoplastic resin (a1-1) and pellets of the polyolefin (a2-5) using a tumbler at 4/96 as a mass ratio of thermoplastic resin (a1-1) / polyolefin (a2-5), without using the thermoplastic elastomer (a3-1), yielding a mixture of pellets in Example 6(1), and thus a thermoformed container was produced in the same manner as Example 6(3) to measure the T-type peel strength in the same manner as Example 6(4). The results are shown in Table 4.

### Comparative Example 10

A 3-kind 5-layer multilayer sheet was produced by coextrusion in the same manner as in Example 6(2), other than using the thermoplastic resin (a1-2) instead of the thermoplastic resin (a1-1), using the polyolefin (a2-3) instead of the polyolefin (a2-5), and dry blending thermoplastic resin (a1-2) / polyolefin (a2-3) / thermoplastic elastomer (a3-1) at 15/65/20 as a mass ratio, yielding a mixture in Example 6(1), and thus a thermoformed container was produced in the same manner as Example 6(3) to measure the T-type peel strength in the same manner as Example 6(4). The results are shown in Table 4.

**Table 4**

| | Resin composition (A) | | | | | a1/a2/a3 (mass ratio) | Interlayer adhesion strength | |
|---|---|---|---|---|---|---|---|---|
| | Thermoplastic resin (a1) | Polyolefin (a2) | | Thermoplastic elastomer (a3) | | | (C-3) ^{*1)} (g/15mm) | (B-1) ^{*1)} (g/15mm) |
| | Type | Type | Density (g/cm³) | Type | Vicat softening temperature (°C) | | | |
| Example 6 | a1-1 | a2-5 | 0.919 | a3-1 | 54 | 4/76/20 | Unpeelable | 940 |
| Comparative Example 9 | a1-1 | a2-5 | 0.919 | - | - | 4/96/0 | Unpeelable | 230 |
| Comparative Example 10 | a1-2 | a2-3 | 0.900 | a3-1 | 54 | 15/65/20 | Unpeelable | 150 |

| | | | | | | | | |
|---|---|---|---|---|---|---|---|---|
| Thermoforming conditions: shaping temperature = 120°C, drawn ratio (S) = 1 *1) Adhesion strength in the interface between the polyolefin (C-3) layer and the resin composition (A) layer. *2) Adhesion strength in the interface between the barrier resin (B-1) layer and the resin composition (A) layer. a2-3: "NOVATEC EG7F" (trade name, polypropylene produced by Japan Polypropylene Corporation) a2-5: "ULTZEX 2022L" (trade name, linear low-density polyethylene produced by Prime Polymer Co., Ltd.) a3-1: "TAFMER P0480" (trade name, an ethylene-propylene copolymer produced by Mitsui Chemicals, Inc., density = 0.87 g/cm³) | | | | | | | | |

As shown in Table 4, in Example 6 where the resin composition (A) was used, as an adhesive layer, which contains the thermoplastic elastomer (a3-1) in addition to the thermoplastic resin (a1-1) and the polyolefin (a2-5), the interlayer adhesion strength was good in either interface of the interface between the resin composition (A) layer and the polyolefin (a2-5) layer and the interface between the resin composition (A) layer and the barrier resin (B-1) layer. In contrast, in Comparative Example 9 where the resin composition (A) was used, as an adhesive layer, which contains the thermoplastic resin (a1-1) and the polyolefin (a2-5) only, although good interlayer adhesion strength was exhibited in the interface between the resin composition layer and the polyolefin (a2-5) layer, the interlayer adhesion strength was decreased in the interface between the resin composition layer and the barrier resin (B-1) layer. Moreover, in Comparative Example 10 where the thermoplastic resin (a1-2) was used instead of the thermoplastic resin (a1-1), the interlayer adhesion strength was decreased in the interface between the resin composition layer and the barrier resin (B-1) layer, similar to Comparative Example 9.

## Claims

1. A resin composition (A) comprising: a thermoplastic resin (a1) having functional groups of at least one kind selected from the group consisting of a boronic acid group and boron-containing groups capable of being converted into a boronic acid group in the presence of water, a polyolefin (a2) not having the functional groups, and a thermoplastic elastomer (a3) not having the functional groups, wherein the thermoplastic resin (a1) is contained 1 to 20 parts by mass and the thermoplastic elastomer (a3) is contained 3 to 50 parts by mass in terms of 100 parts by mass of the polyolefin (a2).

2. The resin composition (A) according to claim 1, wherein the functional groups contained in the thermoplastic resin (a1) are cyclic boronate ester groups.

3. The resin composition (A) according to claim 1 or 2, wherein the thermoplastic resin (a1) is a hydrogenated product of a styrene-diene block copolymer.

4. The resin composition (A) according to any one of claims 1 to 3, wherein the polyolefin (a2) is a polypropylene.

5. The resin composition (A) according to any one of claims 1 to 3, wherein the polyolefin (a2) is a polyethylene.

6. The resin composition (A) according to claim 5, wherein the polyolefin (a2) is a polyethylene having a density of from 0.89 to 0.93 g/cm³.

7. The resin composition (A) according to any one of claims 1 to 6, wherein a Vicat softening temperature of the thermoplastic elastomer (a3) is from 40 to 80°C.

8. The resin composition (A) according to any one of claims 1 to 7, wherein the thermoplastic elastomer (a3) is a polyolefin-based elastomer.

9. The resin composition (A) according to claim 8, wherein the polyolefin-based elastomer is an ethylene-α-olefin copolymer having a density of less than 0.89 g/cm³.

10. An adhesive comprising the resin composition (A) according to any one of claims 1 to 9.

11. A multilayer structure comprising a layer of a barrier resin (B) containing an ethylene-vinyl alcohol copolymer (b1) and a layer of a polyolefin (C) laminated to each other via a layer of the resin composition (A) according to any one of claims 1 to 9.

12. The multilayer structure according to claim 11, wherein the barrier resin (B) is made of a resin composition containing 3 to 50 parts by mass of a polyamide (b2) in terms of 100 parts by mass of the ethylene-vinyl alcohol copolymer (b1).

13. The multilayer structure according to claim 11 or 12, wherein the polyolefin (C) is a polypropylene.

14. A retort packaging container comprising the multilayer structure according to any one of claims 11 to 13, wherein the polyolefin (a2) is a polypropylene.

15. A shaped article of secondary processing comprising the multilayer structure according to any one of claims 11 to 13, wherein the polyolefin (a2) is a polyethylene.

16. A stretched film comprising the multilayer structure according to any one of claims 11 to 13, wherein the polyolefin (a2) is a polyethylene.

17. A thermoformed article comprising the multilayer structure according to any one of claims 11 to 13, wherein the polyolefin (a2) is a polyethylene.

18. A method for producing a multilayer structure according to any one of claims 11 to 13, comprising: coextruding or coinjecting the resin composition (A), the barrier resin (B), and the polyolefin (C), and then performing secondary processing at a temperature of a melting point of the polyolefin (a2) or higher.

19. The method for producing a multilayer structure according to claim 18, wherein the polyolefin (a2) is a polyethylene and the polyolefin (C) is a polypropylene.
